# EUROPEAN PATENT APPLICATION

(11) **EP 0 993 090 A1**
(43) Date of publication of application: **12.04.2000**
(21) Application number: 99203245.8
(22) Date of filing: 05.10.1999
(51) Int. Cl.: H02G 3/12

(54) **Mounting device for a socket for switch material**

(30) Priority: 05.10.1998 NL 1010251
(71) Applicant: VAN GEEL SYSTEMS B.V., 5281 RS Boxtel (NL)
(72) Inventor: Van Geel, Jacobus Antonius Peter, 5281 JT Boxtel (NL)
(74) Representative: Hoorweg, Petrus Nicolaas

(57) **Abstract**

A device for mounting a socket for switch material on a mounting rail with parallel edges, which rail is received for instance in a wall, floor or ceiling channel or in a channel of a pillar, which channel has a substantially U-shaped cross-section and serves to accommodate cables, wherein at least two resilient lips are arranged lying at a mutual distance which extend outward from the socket base and at an angle relative to each other, which lips each have an active part and a locating part set at an angle relative thereto such that during placing the locating parts run up against the rail and the resilient lip deforms and the active part thereof lies against the edges of the rail in the mounted position, with which mounting method pre-wired sockets can also be placed.

## Description

The invention relates to a device for mounting a socket for switch material on a mounting rail with parallel edges, which rail is received for instance in a wall, floor or ceiling channel or in a channel of a pillar, which channel has a substantially U-shaped cross-section and serves to accommodate cables.

It is known to arrange channels for accommodating cables of a general nature, more particularly for electricity, telephone, computer systems and the like. At a determined location in the channel must be arranged in each case switch material such as electrical wall sockets, switch boxes and so on. This arrangement of the sockets usually takes place by means of screw connections, which are only accessible if switch material has not yet been built in (empty) or if the cover plates of the switch material have not yet been placed. Mounting of the switch material can hereby only be completed on the construction site.

The invention has for its object to obviate the above stated drawback and provides for this purpose a device which is distinguished by at least two resilient lips lying at a mutual distance which extend outward from the socket base and at an angle relative to each other, which lips each have an active part and a locating part set at an angle relative thereto such that during placing the locating parts run up against the rail and the resilient lip deforms and the active part thereof lies against the edges of the rail in the mounted position.

The advantage of the snap connection proposed by the invention is that the socket can be provided in advance with switch material with cables, whereafter the completely mounted socket is snapped into the rail of the channel. The position of the socket can be precisely determined because snapping into the rail also results in the possibility of a lateral displacement. The mounting time at the location of use is thereby decreased considerably and finishing can take place more quickly due to the precise adjustment option.

According to a further embodiment the resilient lip is fixed to an L-shaped carrier, the one leg of which can be coupled to the socket base and the end of the other leg transposes into the locating part of the resilient lip.

Such a loop-shaped construction of the resilient lip ensures a greater spring deflection whereby inaccuracies can easily be compensated. For simple manufacture two L-shaped carriers can be combined to form one U-shaped piece, wherein in accordance with a further idea of the invention both the resilient lips and the carrier are manufactured and formed from one strip-like metal part, wherein means are also provided for fixedly coupling the U-shaped carrier to means of the socket base.

The principle of the snap connection according to the invention is suitable not only for edges of the rail in the mounting channel which point toward each other (the so-called C-profile) but also for those pointing away from each other (the so-called ω-profile). The spring element can be snapped easily onto the mounting socket and due to the resulting bias clamps even more fixedly on the mounting socket when this is snapped into the C-profile. Finally, the invention also relates to a socket for switch material provided with a mounting device according to the invention and to an assembly of a socket for switch material with a channel for building into a wall, floor, ceiling or pillar.

The invention is further elucidated hereinbelow with reference to a drawing of a number of embodiments. In the drawing:

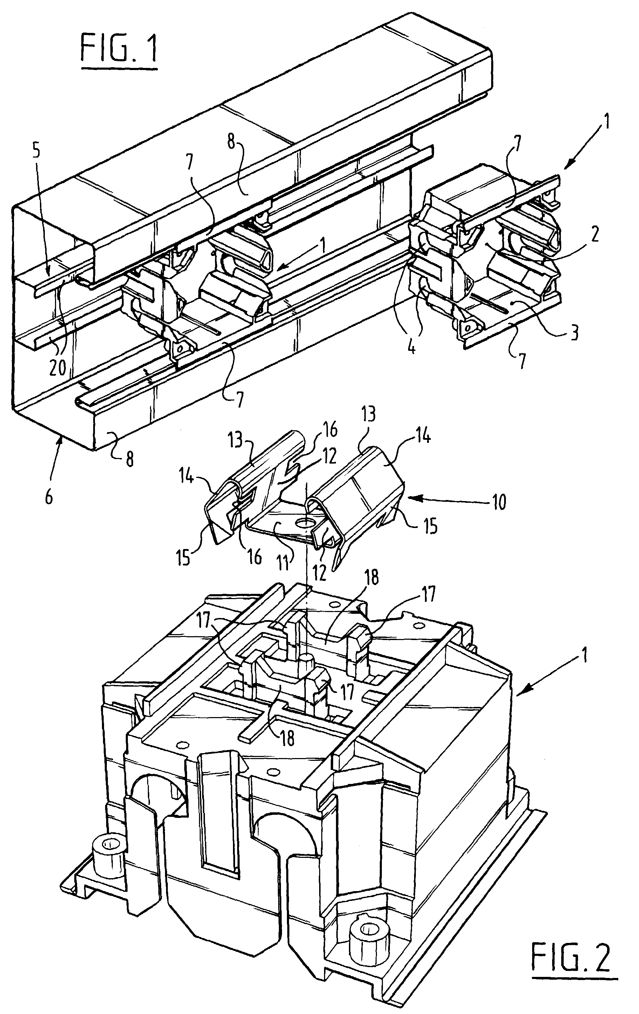

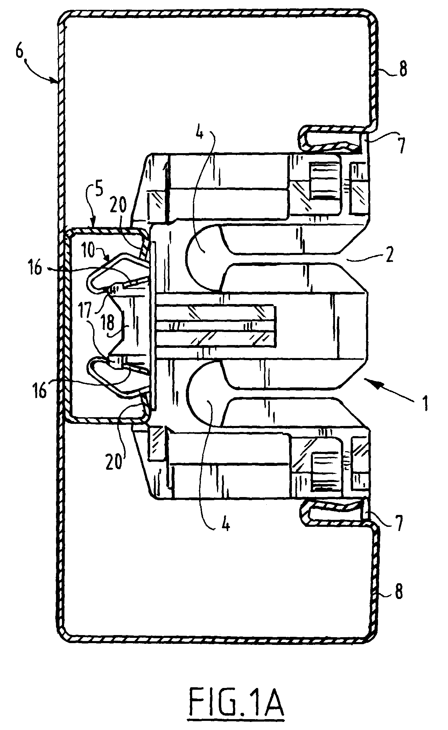

Fig. 1 shows a perspective view of a wall channel profile with a socket for switch material mounted therein and of an unmounted socket;
fig. 1A is a side view of the channel with mounted socket of fig. 1;
fig. 2 and 3 show in each case a perspective view of a socket for switch material which can be used with the wall channel of fig. 1, wherein the element of the resilient lips is shown separately of respectively fitted onto the socket;
fig. 4A, B, C show a perspective view of a channel with socket for mounting which is pre-wired;
fig. 5 shows a mounted respectively separate socket for switch material suitable for a variant of a mounting rail;
fig. 6 is a side view of the underside of the socket mounted on the rail of fig. 5.

The same reference numerals are used in the figures for the same components.

Designated with numeral 1 is a socket for switch material which can be of random form and consists substantially of a base part 2 with walls 3 standing along the peripheral edges thereof, wherein the opposite walls have a feed opening 4 for lead-through of cables. It will be apparent that the socket may have any random suitable shape.

Such a socket for switch material can be mounted on a mounting rail 5 which is placed for instance in a wall channel profile 6 of C-shaped cross-section. The dimensioning of rail 5 and wall channel 6 is such that during mounting the parallel edges 7 of the socket lie precisely flush with the inward directed flanges 8 of the wall channel profile.

It is usual according to the prior art to fix socket 1 to rail 5 with screw means and the like.

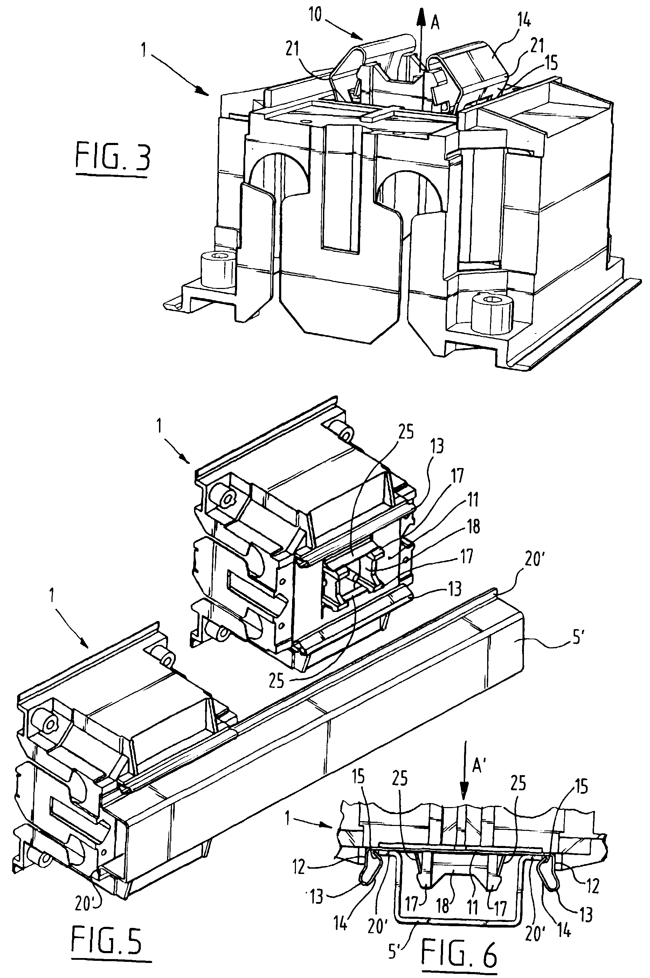

The invention has for its object to improve this by means of a mounting spring 10, see fig. 2 and 3, which consists of a carrier 11, which is substantially U-shaped and wherein the legs 12 are provided on the side remote from base plate 11 with a resilient lip 13 which consists of a locating part 14 and an active part 15. Locating part 14 and active part 15 lie at an angle to each other. Legs 12 are likewise provided with recesses 16 which serve to receive protrusions 17 arranged on an upstanding ridge 18 on the outer side of base 2 of socket 1. There are two parallel ridges 18 in the shown embodiment. Protrusions 17 fall in each case into recesses 16 of carrier 11. Attaching of the clip 14 onto the base of the socket is therefore limited to pressing until protrusions 17 fall into recesses 16, see fig. 3.

During mounting of socket 1 on rail 5 the locating part 14 will run up against the inward directed flanges 20 of rail 5 and, as it is pressed further, the resilient lip 13 will want to bend inward until the ridge 21 between locating part 14 and active part 15 passes over the edge of flange 20 of rail 5, so that active part 15 will remain hooked behind edge 20. Mounting is thus effected with a single pressing movement in the direction of arrow A in fig. 3. Owing to the parallel edges 20 of rail 5 it is further possible to shift the socket laterally, whereby adjustments can optionally take place in respect of the correct position of socket 1 and also in respect of the cover strip (not shown) to be already placed beforehand on wall channel 6.

Detachment of socket 1 can take place easily by arranging a lever under base plate 2 of socket 1, for instance the shank of a screwdriver, whereby a force can be exerted on the socket in opposite direction to arrow A, whereby it snaps out.

As a result of this simple mounting the sockets 1 can be provided in advance with switch material, so that this no longer need take place at the position of use.

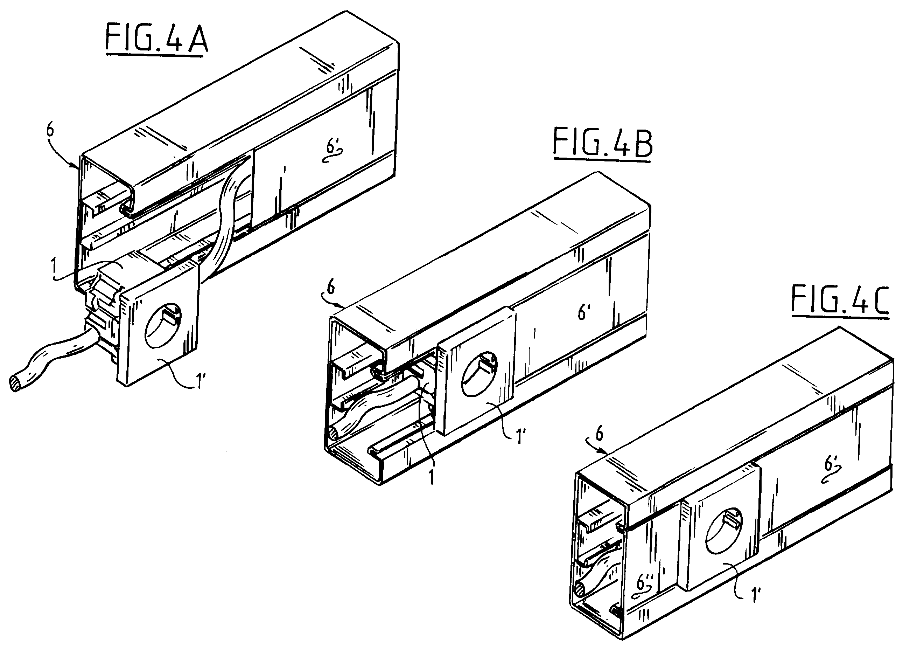

This is illustrated in fig. 4. A pre-wired socket 1 provided with switch material and having front plate 1' is connected on one side, whereafter cover 6' is pressed onto the channel (fig. 4A). The socket is placed against cover 6' (fig. 4B). Finally, the following part 6'' of the cover is then placed (fig. 4C)

Fig. 5 and 6 show an alternative embodiment wherein rail 5' is embodied with outward pointing flanges 20'. This requires a modification of the U-shaped carrier 11, i.e. it is wider and provided with a relatively large opening for receiving the two ridges 18 and protrusions 17. A longitudinal strip 25 along the opposite side edges of the passage opening of carrier 11 ensures a snap connection with protrusions 17, so that carrier 11 can be fixed onto the base plate of socket 1 by a simple snapping movement. Carrier 11 here also has on the outer longitudinal edges a resilient lip 13 with a locating part 14 and an active part 15. The resilient lip is coupled to the free edge of leg 12 of the carrier. It will be apparent that during placing of the socket in the direction of arrow A' in fig. 6 the locating part 15 runs up against the outward pointing edge of flanges 20' of rail 5', presses the lip outward until active part 15 hooks behind the edge. In this manner a simple fixing of socket 1 on mounting rail 5' is also possible for a so-called ω-profile of the rail. A lateral displacement for precise determination of position is here also ensured.

The invention is not limited to the above described embodiments. Carrier 11 does not therefore have to be U-shaped but may consist of two L-shaped parts which can be fixed in different manner to the base of socket 1.

## Claims

1. Device for mounting a socket for switch material on a mounting rail with parallel edges, which rail is received for instance in a wall, floor or ceiling channel or in a channel of a pillar, which channel has a substantially U-shaped cross-section and serves to accommodate cables, **characterized by** at least two resilient lips lying at a mutual distance which extend outward from the socket base and at an angle relative to each other, which lips each have an active part and a locating part set at an angle relative thereto such that during placing the locating parts run up against the rail and the resilient lip deforms and the active part thereof lies against the edges of the rail in the mounted position.

2. Device as claimed in claim 1, **characterized in that** the resilient lip is fixed to an L-shaped carrier, the one leg of which can be coupled to the socket base and the end of the other leg transposes into the locating part of the resilient lip.

3. Device as claimed in claim 2, **characterized in that** the two L-shaped carriers are combined to form one U-shaped piece.

4. Device as claimed in claim 1, 2 or 3, **characterized in that** the edges of the rail are bent outward, wherein the resilient lips are arranged in each case on the inner side of the U-shaped carrier.

5. Device as claimed in claim 1, 2 or 3, **characterized in that** the edges of the rail are bent inward, wherein the resilient lips are arranged in each case on the outer side of the U-shaped carrier.

6. Device as claimed in claim 3, **characterized in that** the lips and the carrier are formed from a single strip of resilient material.

7. Device as claimed in claim 4 or 5, **characterized in that** the other leg of the carrier and the socket base are each provided with co-acting coupling means so as to obtain a mutually form-fitting snap-in connection.

8. Socket for switch material provided with a mounting device as claimed in any of the foregoing claims.

9. Assembly of a socket for switch material with a channel for building into a wall, floor, ceiling or pillar.
